# EUROPEAN PATENT SPECIFICATION

(11) **EP 1 123 324 B1**
(45) Date of publication and mention of the grant of the patent: **02.11.2005**
(21) Application number: 99939439.8
(22) Date of filing: 30.07.1999
(51) Int. Cl.: C08F 20/12, C08F 4/34

(54) **PROCESS USING DIALKYLPEROXIDE COMPOUNDS FOR INITIATING A CHEMICAL REACTION**
VERFAHREN ZUR INITIIERUNG EINER CHEMISCHEN REAKTION UNTER VERWENDUNG VOM DIALKYLPEROXID-VERBINDUNGEN
PROCEDE UTILISANT DES COMPOSES PEROXYDE DIALCOYLIQUE POUR INITIER UNE REACTION CHIMIQUE

(30) Priority: 06.08.1998 EP 98202663
(43) Date of publication of application: 16.08.2001
(73) Proprietor: Akzo Nobel N.V., 6824 BM Arnhem (NL)
(72) Inventor: VAN SWIETEN, Andreas, Petrus, NL-6883 HM Velp (NL); WAANDERS, Petrus, Paulus, NL-7471 SL Goor (NL); MEIJER, John, NL-7415 ES Deventer (NL); HOGT, Andreas, Herman, NL-7514 BJ Enschede (NL)
(74) Representative: Duxbury, Stephen
(86) International application number: PCT/EP1999/005578
(87) International publication number: WO 2000/008072

(56) References cited:
- EP-A- 0 410 351
- US-A- 2 403 758

## Description

The present invention relates to a chemical reaction, in particular the polymerization of monomers, the crosslinking and/or degradation of polymers, the curing of polymers, the modification of polymers, and the production of polymers suitable for solvent based coating applications, and to a process for carrying out one or more of these chemical reactions utilizing such an initiator.

GB954361 discloses ditertiary peroxides and suggests that these are suited for use, interalia, as oxidising agents in organic reactions, as catalysts or initiators in polymerisation reactions in the synthetic rubber and plastics industries. 2-(t-butylperoxy)-2,4,4-trimethylpentane is mentioned as one of the ditertiary peroxides. However, no use of this ditertiary peroxide is disclosed explicitly.

In solution polymerization processes to make acrylic resins for example, t-alkyl peroxides such as t-butyl, t-amyl, and t-tetramethyl butyl peroxides are known as initiators. T-alkyl peroxides decompose on heating to form a t-alkyl oxy radical which acts as the polymerization initiator. This radical also undergoes a β-scission reaction to yield a ketone and an alkyl radical, whereby the relative stability of the initiating alkyl radical reduces hydrogen abstraction leading to polymers having low long chain branching, which yields a degree of control over the molecular weight and the molecular distributions of the polymers obtained.

According to a first aspect of the present invention, there is provided a process for carrying out one or more of the following chemical reactions:
- polymerization of monomers, such as production of polymers suitable for solvent based coating applications and ethylene polymerization, and
- modification of polymers, such as:
   crosslinking and/or degradation of polymers;
- curing of polymers,
and specifically a process for providing acrylic (co)polymers suitable for high solids coating applications, comprising the step of mixing an initiator, preferably tertiary-butyl-1,1,3,3-tetramethylbutylperoxide (TBTMBP) or initiator formulation under reaction conditions with a predetermined reagent, preferably being a polymerizable acrylate monomer.

In the process according to the present invention, polymerization is conducted by any conventional process, except that the specified radical polymerization initiator is used. The polymerization processes may be carried out in the usual manner, for example in bulk, suspension, emulsion or solution.

If ethylene is (co)polymerized, this is usually carried out under high pressure e.g. about 1000 to about 3500 bar and at high temperatures (up to 300°C). The initiation of the polymerization by peroxides depends on the temperature and selected (cocktail of) peroxide(s). In such polymerizations, tert-butyl-1,1,3,3-tetramethylbutylperoxide offers unexpected advantages in comparison with a typically used peroxide like di-tert.butyl peroxide (DTBP, supplied as Trigonox® B by Akzo Nobel). More particularly, the tert-butyl-1,1,3,3-tetramethylbutylperoxide(TB-TMBP) offers the unexpected advantages of lower half-life temperatures and less aggressive alkyl radicals (less grafting), resulting in less long chain branching due to the lower processing temperature needed and/or higher polymer production (reactor output), and quicker polymerization.

In polymerization processes, optionally chain transfer agents are used. Suitable chain transfer agents include: butene-1, 3-methyl butene-1, 2-ethyl hexene-1, octane-1, hydrogen, carbon tetrachloride, p-xylene, propionaldehyde.

The amount of the initiator, which varies depending on the polymerization temperature, the capacity for removing the heat of polymerization, and, when applicable, the kind of monomer to be used and the applied pressure, should be an amount effective to achieve polymerization. Usually, from 0.001-25% by wt of initiator, based on the weight of the (co)polymer, should be employed. Preferably, from 0.001-15% by wt of initiator is employed.

The polymerization temperature for most reactions within the present invention is usually ambient to 350°C, preferably 40° to 300°C.

It is also possible to conduct polymerization using a temperature profile, e.g., to perform the initial polymerization at below 100°C and then elevate the temperature above 100°C to complete the polymerization. These variations are all known to the man skilled in the art, who will have no difficulty in selecting the reaction conditions of choice, depending on the particular polymerization process and the specific radical polymerization initiator to be used.

Suitable (co)monomers for polymerization, e.g. high solids solvent based coating resin using the initiators according to the present invention are olefinic or ethylenically unsaturated monomers, for example substituted or unsubstituted vinyl aromatic monomers, including styrene, α-methylstyrene, p-methylstyrene, and halogenated styrenes; divinylbenzene; ethylene; ethylenically unsaturated carboxylic acids and derivatives thereof such as (meth)acrylic acids, (meth)acrylic esters, acrylic acid, methoxyethyl acrylate, dimethylamino (meth)acrylate, isobutyl methacrylate, lauryl methacrylate, stearic methacrylate, allyl methacrylate, 2-hydroxypropyl (meth)acrylate, methacrylamide, e.g. butyl(meth)acrylate, 2-ethylhexyl (meth)acrylate, 2-ethylhexyl (meth)acrylate, 2-hydroxyethyl (meth)acrylate and glycidyl (meth)acrylate, methyl (meth)acrylate and ethyl (meth)acrylate; ethylenically unsaturated nitriles and amides such as acrylonitrile, methacrylonitrile, and acrylamide; substituted or unsubstituted ethylenically unsaturated monomers such as butadiene, isoprene, and chloroprene; vinyl esters such as vinyl acetate and vinyl propionate and vinylester of versatic acid; ethylenically unsaturated dicarboxylic acids and their derivatives including mono- and diesters, anhydrides, and imides, such as maleic anhydride, citraconic anhydride, citraconic acid, itaconic acid, nadic anhydride, maleic acid, fumaric acid, aryl, alkyl, and aralkyl citraconimides and maleimides; vinyl halides such as vinyl chloride and vinylidene chloride; vinylethers such as methylvinylether and n-butylvinylether; olefins such as ethylene isobutene and 4-methylpentene; allyl compounds such as (di)allyl esters, for example diallyl phthalates, (di)allyl carbonates, and triallyl (iso) cyanurate.

An important requirement of a high-solids solvent based coating resin, other than low molecular weight, is that it must contain chemically active groups (usually hydroxyl or carboxyl functionality) in order to undergo molecular weight build-up and network formation during the final crosslinking (curing) reaction where compounds such as melamine or isocyanates are used as the curing agents. Polymers suitable for use in high-solids coating formulations, normally have a hydroxyl content of from about 2 to about 7% by wt. To prepare a polymer which has a hydroxyl content of about 2-7% by wt, a sufficient amount of hydroxyalkyl acrylate or methacrylate is used (normally, 20-40% by wt of the monomer composition).

Specific examples of hydroxyalkyl acrylates and methacrylates that can be used to prepare polymers suitable for solvent based coating applications include: 2-hydroxyethyl acrylate, 2-hydroxypropyl acrylate, 2-hydroxybutyl acrylate, 2-hydroxyethyl methacrylate, 2-hydroxypropyl methacrylate, 2-hydroxybutyl methacrylate, 3-hydroxypropyl acrylate, 4-hydroxybutyl acrylate, and the like.

Specific examples of alkyl acrylates and methacrylates that can be used to prepare polymers suitable for solvent based coating applications include: methyl methacrylate, ethyl methacrylate, butyl methacrylate, isobutyl methacrylate, hexyl methacrylate, 2-ethylhexyl methacrylate, lauryl methacrylate, ethyl acrylate, propyl acrylate, isopropyl acrylate, butyl acrylate, isobutyl acrylate, hexyl acrylate, 2-ethylhexyl acrylate, lauryl acrylate, and the like.

Other monomers, such as styrene, para-methyl styrene, acrylic acid, methacrylic acid, or vinyl acetate, can also be used in the preparation of polymers suitable for solvent based coating applications (i.e. control of monomer costs and/or to obtain a balance of film properties). Chain transfer agents can be used, for example thiols, disulphides, or CCl₄.

The polymerization process of the present invention can be employed to introduce functional groups into (co)polymers. This may be accomplished by employing a peroxide which contains one or more functional groups attached thereto. These functional groups such as hydroxyl and acid groups will remain intact in the free radicals formed by the peroxides and thus are introduced into the (co)polymer. Conventional polymerization conditions and equipment may be used to achieve this object of the present invention.

The initiators may be used as a curing agent for unsaturated polyesters and unsaturated polyester resins. The initiators usually include an unsaturated polyester and one or more ethylenically unsaturated monomers.

Suitable polymerizable monomers include styrene, alfamethylstyrene, p-methylstyrene, chlorostyrenes, bromostyrenes, vinylbenzyl chloride, divinylbenzene, diallyl maleate, dibutyl fumarate, triallyl phosphate, triallyl cyanurate, diallylphthalate, diallyl fumarate, methyl (meth)acrylate, n-butyl (meth)acrylate, ethyl acrylate, and mixtures thereof, which are copolymerizable with unsaturated polyesters obtained by esterifying at least one ethylenically unsaturated di- or polycarboxylic acid, anhydride or acid halide, such as maleic acid, fumaric acid, glutaconic acid, itaconic acid, mesaconic acid, citraconic acid, allylmalonic acid, tetrahydrophthalic acid, with saturated and unsaturated di- or polyols, such as ethylene glycol, diethylene glycol, triethylene glycol, 1,2-, and 1,3-propanediols, 1,2-, 1,3-, and 1,4-butanediols, 2,2-dimethyl-1,3-propanediols, 2-hydroxymethyl-2-methyl-1,3-propanediol, 2-buten-1,4-diol, 2-butyn-1,4-diol, 2,4,4-trimethyl-1,3-pentanediol, glycerol, pentaerythritol, mannitol, wherein the di- or polycarboxylic acids are optionally partially replaced by saturated di- or polycarboxylic acids, such as adipic acid, succinic acid, and/or by aromatic di- or polycarboxylic acids, such as phthalic acid, trimellitic acid, pyromellitic acid, isophthalic acid, and terephthalic acid, and wherein the acids used are optionally substituted by groups such as halogenated adds including tetrachlorophthalicacid and tetrabromophthalicacid.

The initiators are suited for use in the modification of polymers. More particularly, these peroxides can be employed in processes for the crosslinking or degradation of polymers or the grafting of monomers onto polymers such as polyolefins and elastomers, and the functionalization of polymers in the case of functional group-containing peroxides of the present invention.

In general, the initiator may be brought into contact with the (co)polymer in various ways, depending upon the particular object of the modfication process. The polymer material may be in the molten state, in the form of a solution, or, in the case of an elastomer, in a plastic state or in any physical form including finely divided particles (flakes), pellets, film, sheet, in the melt, in solution and the like. Polymers may also be in the liquid form, e.g. liquid rubbers.

In general, any (co)polymer comprising abstractable hydrogen atoms, in particular polyolefins, can be modified by the present process.

The amount of initiator used in the modification process of the present invention should be an amount effective to achieve significant modification of the (co)polymer when treating a (co)polymer. More particularly, from 0.001-15.0% by wt of peroxide, based on the weight of the (co)polymer, should be employed. More preferably, from 0.005-10.0% by wt is employed. Most preferably, an amount of 0.01-5.0% by wt is employed.

Polymers suitable for solvent based coating applications are prepared by solution polymerization in which select monomers are blended with solvent, initiator according to the present invention, and, optionally, a chain transfer agent, and heated to about 90°-200°C for 0.1-20 hours.

Low solvent to monomer (s/m) ratios are used to conduct the polymerization in order to achieve the desired solvent based content required for high-solids coating applications, typically, 25 to 95% by wt solids. The solvent to monomer ratios generally used are in the range of (3/1) to (0.05/1).

Polymerization is generally conducted at or below about the reflux temperature of the solvent or mixture of solvents.

Adhesion promoting monomers can also be used in the preparation of polymers suitable for solvent based coating applications, such as methacrylic acid, diethylaminoethyl methacrylate, di-methylaminoethyl methacrylate, tertiary-butylaminoethyl methacrylate, 3-(2-methacryloxyethyl)-2,2-spirocylohexyloxasolidene, and the like.

Examples of solvents which are used to prepare polymers suitable for solvent based coating applications include: toluene, xylene, ethyl acetate, n-butyl acetate, acetone, methyl ethyl ketone, methyl n-amyl ketone, ethyl alcohol, benzyl alcohol, oxo-hexyl acetate, oxo-heptyl acetate, propylene glycol methyl ether acetate, mineral spirits, and other aliphatic, cycloaliphatic and aromatic hydrocarbons, e.g. Solvesso 100®, esters such as Exxate 700®, ethers, ketones, and alcohols which are conventionally used. Commercially, the primary considerations in the selection of a suitable solvent are cost, toxicity, flammability, volatility, and chain-transfer activity.

According to another aspect of the present invention, there is provided a process for carrying out one or more of the chemical reactions:
- provision of acrylic co-monomers suitable for high solids coating applications,
- the polymerization of monomers,
- the degradation of polymers, and
- the curing of polymers,
comprising the step of contacting under reaction conditions an asymmetric, saturated peroxide compound having the general formula:

R-O-O-R1

wherein R and R1 are selected from the group consisting essentially of:
- C(CH₃)₂(CH₂)n-C₆H(5-m)-(R2)m, wherein n=0, 1 or 2 and m=0, 1, 2 or 3 and wherein R2 = an isopropyl or 2-hydroxy-isopropylgroup,
- a tertiary cycloalkyl group having a carbon chain length of about C4 to about C22,
- a tertiary-alkylcycloalkyl group having a carbon chain length of about C6 to about C22,
- a tertiary-cycloalkylalkylgroup having a carbon chain length of about C4 to about C22,

The inventors have found on utilizing such an initiator obtained via this process, that polymers are obtained with improved properties, for example having lower molecular weights and lower molecular weight distributions than polymers obtained with known initiators.

The inventors theorize that during polymerization of acrylic resins, the initiators according to the present invention provide less generation of decomposition products that influence the reflux temperature and an increased generation of free radical initiating species. This may be explained by a synergistic combination of the R and R1 groups of the initiators, which leads to a decreased reflux temperature depression due to less generation of the corresponding alcohol and more generation of the free radical initiating species.

The initiator compound utilized in the process can have a half-life of about 1 hour at a reaction temperature of about 100-200°C, preferably of about 110-160°C.

According to a further aspect of the present invention, there is provided a formulation for initiating a chemical reaction, said formulation comprising TBTMBP compound and standard additives and fillers.

The peroxide formulations can be prepared, transported, stored, and applied in the form of powders, granules, pellets, pastilles, flakes, slabs, pastes, solid masterbatches, and liquids. These formulations may have the form of a dispersion, such as a suspension or an emulsion. These formulations may be phlegmatized, if necessary, depending on the particular peroxide and its concentration in the formulation. Which of these forms is to be preferred depends partly on the application for which it will be used and partly on the manner in which it will be mixed. Also, considerations of safety may play a role to the extent that phlegmatizers may have to be incorporated into certain compositions to ensure their safe handling.
The formulations of the present invention are transportable, storage stable, and contain 1.0-90% by weight of one or more peroxides according to the present invention. Transportable means that the formulations of the present invention have passed the pressure vessel test (PVT). Storage stable means that the formulations of the present invention are both chemically and physically stable during a reasonable storage period under standard conditions.

The formulations of the present invention can be liquids, solids or pastes depending on the melting point of the peroxide and the diluent employed. Liquid formulations can be made using liquid phlegmatizers, liquid plasticizers, organic peroxides, and mixtures thereof as the diluent. The liquid component is generally present in an amount of 1-99% by wt of the composition, preferably 10-90% by wt, more preferably 30-90% by wt, and most preferably 40-80% by wt of the liquid formulation consists of liquid diluents.

In liquid formulations a liquid carrier or diluent is used. Preferably this carrier or diluent is a solvent

The formulations of the present invention may also contain optional other additives as long as these do not have a significant negative effect on the transportability and/or storage stability of the formulations. As examples of such additives may be mentioned: anti-caking agents, free-flowing agents, sequestering agents, anti-ozonants, anti-oxidants, anti-degradants, U.V. stabilizers, coagents, fungicides, antistats, pigments, dyes, coupling agents, dispersing aids, blowing agents, lubricants, process oils, and mould-release agents. These additives may be employed in their usual amounts.

In the solid and/or paste formulations of the present invention solid carrier materials are employed. Examples of such solid carriers are low-melting solids, such as dicyclohexylphthalate, dimethyl fumarate, dimethylisophthalate, triphenylphoshphate, glyceryltribenzoate, trimethylolethane tribenzoate, dicyclohexylterephtalate, paraffinic waxes, dicyclohexylisophthalate, polymers, and inorganic supports. Inorganic supports include materials such as fumed silica, precipitated silica, hydrophobic silica, chalk, whiting, surface-treated clays such as silane-treated clays, calcined clays, and talc.

Examples of additives include: stabilizers such as inhibitors of oxidative, thermal or ultraviolet degradation, lubricants, extender oils, pH controlling substances such as calcium carbonate, release agents, colorants, reinforcing or non-reinforcing fillers such as silica, clay, chalk, carbon black, and fibrous materials such as glass fibers, plasticizers, diluents, chain transfer agents to control the molecular weight of the polymer, accelerators and other types of peroxides. These additives may be employed in the usual amounts.

Suitable solvents comprise alcohols, cycloalkanols, ethers, anhydrides, carbonates, alkylene glycols, amides, aldehydes, ketones, epoxides, esters, halogenated hydrocarbons such as chlorinated hydrocarbons, and mixtures thereof.

Suitable solvents generally preferred are hydrocarbon solvents, aromatic hydrocarbon solvents, aralkyl solvents, paraffinic oils, white oils, and silicone oils, as well as their mixtures. Useful hydrocarbon solvents include, but are not limited to, benzene, xylene, toluene, mesitylene, hexane, hydrogenated oligomers of alkanes such as Isopar® products (ex. Exxon), Shellsol® products (ex Shell), pentane, heptane, decane, isododecane, decalin, and the like. Paraffinic oils useful as apolar solvents include, but are not limited to, halogenated paraffinic oils and paraffinic diesel oil. Other oils, including white oils, epoxidized soybean oils, and silicone oils are also useful in the present invention.

According to yet another aspect of the present invention, there is provided the use of TBTMBP, in the degradation of polymers

The invention will now be further illustrated by way of the following examples and tables.

### Example on acrylics polymerizations:

### Example 1

### High-solids acrylic resin synthesis

High-solids acrylic resins were produced by the polymerization of mixtures of acrylic monomers and other monomers by radical initiators in a solvent. In order to achieve low viscosity resins, the molecular weights of the polymer produced are to be low. To achieve this, a higher concentration of initiator, more efficient initiators, or a higher temperature can be applied. Below the results obtained with dialkylperoxides are described.

### Recipe

| Monomers | parts by weight (total monomers =100%) |
|---|---|
| n-Butylacrylate (BA) | 40 |
| Styrene (STY) | 20 |
| 2-Hydroxyethylmethacrylate(HEMA) | 28 |
| Methylmethacrylate(MMA) | 10 |
| Methacrylic acid (MA) | 2 |
| Solvesso 100® (S-100) | 40 (solvent) |

Initiator concentration: 30 meq/100 g monomers
Temperature: 140°C and 165°C

### Procedure

Polymerizations were conducted under nitrogen in a jacketed glass reactor equipped with a turbine stirrer, thermocouple, reflux condenser, and injection inlet. The initiator was added to the monomers. This mixture was dosed to the solvent in a stirred vessel via the laboratory pump at the prescribed temperature in approx. 4 hours. The reaction was continued for an additional hour to reduce residual monomer/initiator. From the resins obtained the molecular weights, the colour, and the percentage of solids were determined.

### Raw materials

| Monomers + solvent | Supplier |
|---|---|
| n-Butylacrylate (BA) | Acros |
| 2-Hydroxyethylmethacrylate(HEMA) | Acros |
| Methylmethacrylate(MMA) | Acros |
| Styrene (STY) | Merck |
| Methacrylic acid (MA) | Janssen |
| Solvesso 100® | Exxon |

| Initiators (ex Akzo Nobel) | Appearance |
|---|---|
| tert-butyl-1,1,3, 3-tetramethylbutyl | |
| peroxide (TBTMBP) | colorless liquid |
| tert-amyl-t-butylperoxide (TATBP) | colorless liquid |
| Trigonox® B (Di-tertiary-butylperoxide (TxB)) | colorless liquid |

The amount of initiator used (30 meq/100 g monomers) was corrected for the assay of the peroxides as supplied.

### Analysis

Molecular weights were determined by gel permeation chromatography using polystyrene standards, according to method AR/94.14-1/HPLC. Solids contents were determined by percent non-volatile matter (0.5 hour at 150°C).

### Results

**Table 1:**

| Temp. 165°C | | | | | | |
|---|---|---|---|---|---|---|
| Initiator | [Initiator] meq/100gM | Reflux temp. (°C) | Solids content (%) | Mw (g/mol) | Mn (g/mol) | Disp. |
| TBTMBP | 30 | 165 | 71.0 | 3300 | 2000 | 1.7 |
| TATBP | 30 | 164 | 72.2 | 3700 | 2000 | 1.8 |
| Tx B | 30 | 157 | 74.3 | 5500 | 2900 | 1.9 |
| TBTMBP | 15 | | 71.1 | 4400 | 2100 | 2.1 |
| TBTMBP | 60 | | 72.0 | 1600 | 800 | 2.0 |

**Table 2:**

| Temp. 140°C | | | | | |
|---|---|---|---|---|---|
| Initiator | [Initiator] meq/100gM | Solids content (%) | Mw (g/mol) | Mn (g/mol) | Disp. |
| TBTMBP | 15 | 72.8 | 10750 | 4000 | 2.7 |
| TBTMBP | 30 | 71.0 | 7400 | 3400 | 2.2 |
| TBTMBP | 60 | 73.2 | 4900 | 2200 | 2.2 |
| TBHDMBP | 30 | 70.8 | 7130 | 3170 | 2.3 |
| TATBP | 30 | 68.4 | 11900 | 4400 | 2.7 |
| Tx B | 30 | 72.4 | 18500 | 6100 | 3.0 |
| TBHDMBP = tert butyl 3-hydroxy-1,1-dimethylbutyl peroxide | | | | | |

### Conclusion

The mixed dialkylperoxides TBTMBP and TATBP gave lower Mw and Mn as compared to the symmetrical dialkylperoxides Tx B, indicating a more efficient initiation of the polymerization. In addition, a synergistic effect can be explained from the combination of the higher reflux temperature due to less generation of t-butanol (as compared to Tx B), and the generation of more efficient alkyl-radicals from the amyl and 1,1,3,3-tetramethylbutylmoieties. The higher reflux temperature promoted the formation of lower molecular weights by affecting the polymerization kinetics, as well as the formation of more efficient alkyl radicals.

### Example 2

The comparison of DTBP and TB-TMBP was illustrated by the half-life temperatures for decomposition. As the residence times in the LDPE reactors are very short, the half-life times were in the range of 0.1-100 sec.

| half-life time at 2000 bar | DTBP peroxide | TB-TMBP peroxide |
|---|---|---|
| 0.1 sec | 284°C | 270°C |
| 1.0 sec | 250°C | 235°C |
| 10 secs | 220°C | 203°C |
| 100 secs | 193°C | 175°C |

The following halflife temperatures of the described dialkylperoxides were determined by thermal analysis of 0.1 molar solution of the dialkylperoxidein monochlorobenzene on a Mettler DSC 820.

| Dialkylperoxide | T at which t1/2=1hr(°C) |
|---|---|
| (CH₃)₃COOC(CH₃)₂C₂H₅ (TATBP) | 142 |
| (CH₃)₃COOC(CH₃)₂CH₂C(CH₃)₃ (TBTMBP) | 123 |
| (CH₃)₃COOC(CH₃)₂CH₂CH(CH₃)OH (TBHDMBP) | 125 |

The lower half-life temperature offers the possibility of a lower processing temperature resulting in less long chain branching for TB-TMBP compared with DTBP.

The formation of less aggressive alkyl radicals is supported by the analyzed decomposition products indication a higher level of beta scisson compared with DTBP.

The halflife temperature was determined by thermal analysis of 0.1 molar solution of the dialkylperoxide in monochlorobenzene on a Mettler DSC 820.
Temperature program used: 10 C-3C/min-220C.
The heatflow was plotted versus the temperature by a computer.
The halflife temperature was calculated by the use of the Mettler Star software.

### Example 3

### Curing of unsaturated polyester:

Objective: To check the cure performance of TBTMBP as curing agent for unsaturated polyester and compare it with Trigonox C (tertiary butyl perbenzoate).

Test procedure: The Time-Temperature curve was measured at 100°C and 120°C on compounds containing 100 parts of polyester resin, 150 parts of sand as filler, and 1 part of peroxide. This was carried out according to the method outlined by the Society of Plastic Institute. 25 g of compound were poured into a test tube and a thermocouple was placed through the enclosure cork at the center of the tube. The glass tube was then placed in the oil bath maintained at a specific test temperature and the time-temperature curve was measured. From the curve the following parameters were calculated:
- Gel time (GT) =: time in minutes elapsed between the start of the experiment and the moment that the peak temperature is reached.
- Time to peak exotherm (TTP) =: time elapsed between the start of the experiment and the moment that the peak temperature is reached.
- Peak exotherm (PE) =: the maximum temperature which is reached.
- Residual styrene (RS) =: unreacted monomer styrene content measured on samples removed from the bath 3 minutes after the peak exotherm.

| | Test temp. °C | GT,min. | TTP,min. | PE,°C | RS,% |
|---|---|---|---|---|---|
| Trig.C | 100 | 7.2 | 14 | 131 | 1.8 |
| | 120 | 1.48 | 4.4 | 212 | 0.01 |
| TBTMBP | 100 | 6.1 | 13 | 134 | 1.6 |
| | 120 | 1.4 | 4.4 | 210 | 0.01 |
| Trig. C = tertiary butyl perbezoate TBTMBP= tertiary butyl-1,1,3,3-tetramethyl-butylperoxide | | | | | |

The invention is not limited to the above description; rather, the requested rights are determined by the following claims.

## Claims

1. Process for providing acrylic (co)polymers suitable for high solids coating applications, comprising the step of:
- contacting under polymerizing conditions, the asymmetric, saturated peroxide compound tertiary-butyl-1,1,3,3 tetramethylbutyl peroxide (TBTMBP) with at least one polymerizable acrylate monomer.

2. Process according to claim 1 wherein the acrylate monomer is selected from the group consisting essentially of:
- hydroxyalkyl acrylates and methacrylates including 2-hydroxyethyl acrylate, 2-hydroxypropyl acrylate, 2-hydroxybutyl acrylate, 2-hydroxyethyl methacrylate, 2-hydroxypropyl methacrylate, 2-hydroxybutyl methacrylate, 3-hydroxypropyl acrylate, 4-hydroxybutyl acrylate; and
- alkyl acrylate and methacrylates including methyl methacrylate, ethyl methacrylate, butyl methacrylate, isobutyl methacrylate, hexyl methacrylate, 2-ethylhexyl methacrylate, lauryl methacrylate, ethyl acrylate, propyl acrylate, isopropyl acrylate, butyl acrylate, isobutyl acrylate, hexyl acrylate, 2-ethylhexylacrylate, lauryl acrylate, acrylic acid, and methacrylic acid,
and wherein optionally a comonomer selected from the group of styrene, paramethyl styrene, and vinyl acetate is used.

3. Process according to claims 1 or 2 wherein the acrylate monomer(s) are derived from substituted or unsubstituted acrylic acid, methacrylic acid or esters thereof and are subjected to solution polymerisation wherein 20-40% by wt of the monomer composition is hydroxyalkyl acrylate or methacrylate in a temperature range of from 90° to 200°C, in the presence of a solvent suitable for high-solids coating applications wherein the solvent to monomer ratio is 3:1 to 0.1:1.

4. Process according to any of the preceding claims 1-3 wherein tertiary-butyl-1,1,3,3-tetramethylbutylperoxide is present in the range of 0.001-15 percent by weight, based on the weight of the total amount of monomer, preferably from 0.005-10% by wt and most preferably in an amount of 0.01-5% by wt.

5. Acrylic resin obtainable by the process according to any of the claims 1-4 having one or more of the following properties:
- a polydispersity of 1,5-3
- a solids content of 40-90%
- a Mw (g/mol) of 1000-8000
- a Mn (g/mol) of 500-4000.

6. Use of TBTMBP, optionally in combination with tert-amyl-t-butylperoxide (TATBP), for curing unsaturated polyester resins or the polymerisation of acrylic monomers to provide acrylic (co)polymers suitable for high solids coating applications.

7. Use of TBTMBP in the degradation of polymers.

8. Process for carrying out one or more of the chemical reactions:
- the polymerisation of monomer(s), preferably including acrylic (co)monomers to render a (co)polymer suitable for high solids coating applications,
- degradation of polymers, and
- the curing of polymers,
comprising the step of contacting monomer(s) and/or polymer(s) under reaction conditions with an asymmetric, saturated peroxide compound having the general formula:
R-O-O-R1
wherein R and R1 are selected from the group consisting of:
- C(CH₃)₂(CH₂)ₙ-C₆H₍₅₋ₘ₎-(R2)m, wherein n=0, 1 or 2 and m=0, 1, 2 or 3 and wherein R2 = an isopropyl or 2-hydroxy-isopropylgroup,
- a tertiary cycloalkyl group with 4 to 22 carbon atoms,
- a tertiary-alkylcycloalkyl group with 6 to 22 carbon atoms,
- a tertiary-cycloalkylalkyl group with 6 to 22 carbon atoms,
- a pinanyl group, and
- a p-menthyl group,
whereby alkyl, aryl and aralkyl groups may be optionally substituted with functional group(s), such as hydroxy, carboxy.

9. Process according to claim 8 wherein R and/or R1 are selected from:
- C (CH₃)₂-CH₂-C₆H₅.

10. Process according to claims 8 or 9 wherein the peroxide is selected from:
- ROOC (CH₃)₂CH₂C₆H₅,
wherein R= C₆H₅C(CH₃)₂.

11. Process according to any one of the preceding claims 8-10, wherein the peroxide initiator has a half-life of 1 hour at 90 to 200°C, preferably of 100 to 160°C.

12. Process according to claim 11 wherein the peroxide initiator used is present in the wt% range of 0.001-15 based on the weight of the monomer, preferably from 0.005-10% by wt and most preferably in an amount of 0,01-5% wt.

13. Process according to claim 12 wherein the reaction is carried out within a temperature range of 30 to 350°C, preferably 40 to 300°C.

14. Process according to claim 13 wherein the reagent is a monomer suitable for polymerisation and are olefinic or ethylenically unsaturated monomers.

15. Process according to claim 14 wherein the monomer is selected from the group consisting of olefinic or ethylenically unsaturated monomers, for example substituted or unsubstituted vinyl aromatic monomers, including styrene, α-methylstyrene, p-methylstyrene, and halogenated styrenes; divinylbenzene; ethylene; ethylenically unsaturated carboxylic acids and derivatives thereof such as (meth)acrylic esters, acrylic acid, methoxyethyl acrylate, dimethylamino (meth)acrylate, isobutyl methacrylate, lauryl methacrylate, stearic methacrylate, allyl methacrylate, 2-hydroxypropyl (meth)acrylate, methacrylamide, e.g. butyl(meth)acrylate, 2-ethylhexyl (meth)acrylate, 2-ethylhexyl (meth)acrylate, 2-hydroxyethyl (meth)acrylate and glycidyl (meth)acrylate, methyl (meth)acrylate and ethyl (meth)acrylate; ethylenically unsaturated nitriles and amides such as acrylonitrile, methacrylonitrile and acrylamide; substituted or unsubstituted ethylenically unsaturated monomers such as butadiene, isoprene and chloroprene; vinyl esters such as vinyl acetate and vinyl propionate and vinylester of versatic acid; ethylenically unsaturated dicarboxylic acids and their derivatives including mono- and diesters, anhydrides, and imides, such as maleic anhydride, citraconic anhydride, citraconic acid, itaconic acid, nadic anhydride, maleic acid, fumaric acid, aryl, alkyl, and aralkyl citraconimides and maleimides; vinyl halides such as vinyl chloride and vinylidene chloride; vinylethers such as methylvinylether and n-butylvinylether; olefins such as ethylene, isobutene and 4-methylpentene; and allyl compounds such as (di)allyl esters, for example diallyl phthalates, (di)allyl carbonates, and triallyl (iso) cyanurate.

16. Process according to claim 8 for curing polymers, in particular unsaturated polyesters and/or unsaturated' polyester resins, wherein the reagent is selected from the group consisting essentially of polymerizable monomers including styrene, alfamethylstyrene, p-methylstyrene, chlorostyrenes, bromostyrenes, vinylbenzyl chloride, divinylbenzene, diallyl maleate, dibutyl fumarate, triallyl phosphate, triallyl cyanurate, diallylphthalate, diallyl fumarate, methyl (meth)acrylate, n-butyl (meth)acrylate, ethyl acrylate, and mixtures thereof, which are copolymerizable with unsaturated polyesters obtained by esterifying at least one ethylenically unsaturated di- or polycarboxylic acid, anhydride or acid halide, such as maleic acid, fumaric acid, glutaconic acid, itaconic acid, mesaconic acid, citraconic acid, allylmalonic acid, tetrahydrophtalic acid, with saturated and unsaturated di- or polyols, such as ethylene glycol, diethylene glycol, triethylene glycol, 1,2- and 1,3-propanediols, 1,2-, 1,3- and 1,4-butanediols, 2,2-dimethyl-1,3-propanediols, 2-hydroxymethyl-2-methyl-1,3-propanediol, 2-buten-1,4-diol, 2-butyn-1,4-diol, 2,4,4-trimethyl-1,3-pentanediol, glycerol, pentaerythritol, mannitol, wherein the di- or polycarboxylic acids are optionally partially replaced by saturated di- or polycarboxylic acids, such as adipic acid, succinic acid, and/or by aromatic di- or polycarboxylic acids, such as phthalic acid, trimellitic acid, pyromellitic acid, isophthalic acid, and terephthalic acid and wherein the acids used are optionally substituted by groups such as halogenated acids including tetrachlorophthalic acid and tetrabromophthalic acid.

17. Process according to any of the claims 8-16 for solution polymerisation wherein the monomers are derived from substituted or unsubstituted acrylic acid or methacrylic acid or esters thereof wherein 20-40% by wt of the monomer composition is hydroxyalkyl acrylate or methacrylate in a temperature range of from 90° to 200°C, in the presence of a solvent suitable for high-solids coating applications wherein the solvent to monomer ratio is 3:1 to 0.1:1.

18. Process according to claim 17 wherein the monomer is selected from the group consisting of:
- hydroxyalkyl acrylates and methacrylates including 2-hydroxyethyl acrylate, 2-hydroxypropyl acrylate, 2-hydroxybutyl acrylate, 2-hydroxyethyl methacrylate, 2-hydroxypropyl methacrylate, 2-hydroxybutyl methacrylate, 3-hydroxypropyl acrylate, and 4-hydroxybutyl acrylate, and
- alkyl acrylates and methacrylates including, methyl methacylate, ethyl methacrylate, butyl methacrylate, isobutyl methacrylate, hexyl methacrylate, 2-ethylhexyl methacrylate, lauryl methacrylate, ethyl acrylate, propyl acrylate, isopropyl acrylate, butyl acrylate, isobutyl acrylate, hexyl acrylate, 2-ethylhexyl acrylate, lauryl acrylate, and, styrene, para-methyl styrene, acrylic acid, methacrylic acid, and vinyl acetate.

19. Process according to claim 18 further comprising the step of adding one or more adhesion promoting agents selected from the group consisting essentially of:
- diethylaminoethyl methacrylate, di-methylaminoethyl methacrylate, tertiary-butylaminoethyl methacrylate, 3-(2-methacryloxyethyl)-2,2-spirocyclohexyl oxazolidene, and (meth)acrylic acid.

20. Process according to any one of the claims 1-4, 8-19 carried out in the presence of a suitable solvent selected from the group preferebly consisting essentially of:
- toluene, xylene, ethyl acetate, acetone, methyl ethyl ketone, methyl n-amyl ketone, ethyl alcohol, benzyl alcohol, oxo-hexyl acetate, oxo-heptyl acetate, propylene glycol methyl ether acetate, mineral spirits, and other aliphatic, cycloaliphatic and aromatic hydrocarbon, esters, ethers, ketones, and alcohols which are conventionally used.

## Patentansprüche

1. Verfahren zur Gewinnung von Acryl(co)polymeren, die für Beschichtungsanwendungen mit hohem Feststoffgehalt geeignet sind, wobei das Verfahren den folgenden Schritt umfasst:
In-Kontakt-Bringen der asymmetrischen gesättigten Peroxidverbindung tertiär-Butyl-1,1,3,3-tetramethylbutylperoxid (TBTMBP) unter polymerisierenden Bedingungen mit wenigstens einem polymerisierbaren Acrylatmonomer.

2. Verfahren gemäß Anspruch 1, wobei das Acrylatmonomer aus der Gruppe ausgewählt ist, die im Wesentlichen aus:
- Hydroxyalkylacrylaten und -methacrylaten einschließlich 2-Hydroxyethylacrylat, 2-Hydroxypropylacrylat, 2-Hydroxybutylacrylat, 2-Hydroxyethylmethacrylat, 2-Hydroxypropylmethacrylat, 2-Hydroxybutylmethacrylat, 3-Hydroxypropylacrylat, 4-Hydroxybutylacrylat und
- Alkylacrylaten und -methacrylaten einschließlich Methylmethacrylat, Ethylmethacrylat, Butylmethacrylat, Isobutylmethacrylat, Hexylmethacrylat, 2-Ethylhexylmethacrylat, Laurylmethacrylat, Ethylacrylat, Propylacrylat, Isopropylacrylat, Butylacrylat, Isobutylacrylat, Hexylacrylat, 2-Ethylhexylacrylat, Laurylacrylat, Acrylsäure und Methacrylsäure
besteht und wobei gegebenenfalls ein Comonomer, das aus der Gruppe Styrol, Paramethylstyrol und Vinylacetat ausgewählt ist, verwendet wird.

3. Verfahren gemäß Anspruch 1 oder 2, wobei das bzw. die Acrylatmonomere von substituierter oder unsubstituierter Acrylsäure, Methacrylsäure oder Estern davon abgeleitet sind, wobei 20-40 Gew.-% der Monomerzusammensetzung Hydroxyalkylacrylat oder -methacrylat sind, und einer Lösungspolymerisation in einem Temperaturbereich von 90 bis 200 °C in Gegenwart eines Lösungsmittels, das für Beschichtungsanwendungen mit hohem Feststoffgehalt geeignet ist, unterzogen werden, wobei das Verhältnis von Lösungsmittel zu Monomer 3:1 bis 0,1:1 beträgt.

4. Verfahren gemäß einem der vorstehenden Ansprüche 1 bis 3, wobei das tertiär-Butyl-1,1,3,3-tetramethylbutylperoxid in einer Menge im Bereich von 0,001 bis 15 Gew.-%, bezogen auf das Gewicht der Gesamtmonomermenge, vorzugsweise 0,005 bis 10 Gew.-% und am meisten bevorzugt in einer Menge von 0,01 bis 5 Gew.-% vorhanden ist.

5. Acrylharz, das nach dem Verfahren gemäß einem der Ansprüche 1 bis 4 erhältlich ist und eine oder mehrere der folgenden Eigenschaften hat:
- eine Polydispersität von 1,5 bis 3;
- einen Feststoffgehalt von 40 bis 90%;
- ein Mw (g/mol) von 1000 bis 8000;
- ein Mn (g/mol) von 500 bis 4000.

6. Verwendung von TBTMBP, gegebenenfalls in Kombination mit tert-Amyl-t-butylperoxid (TATBP), zur Härtung von ungesättigten Polyesterharzen oder zur Polymerisation von Acrylmonomeren zur Gewinnung von Acryl-(co)polymeren, die für Beschichtungsanwendungen mit hohem Feststoffgehalt geeignet sind.

7. Verwendung von TBTMBP beim Abbau von Polymeren.

8. Verfahren zur Durchführung von einer oder mehreren der folgenden chemischen Reaktionen:
- Polymerisation von einem oder mehreren Monomeren, die vorzugsweise Acryl(co)monomere umfassen, unter Bildung eines (Co)-polymers, das für Beschichtungsanwendungen mit hohem Feststoffgehalt geeignet ist;
- Abbau von Polymeren; und
- Härtung von Polymeren;
umfassend den Schritt des In-Kontakt-Bringens von einem oder mehreren Monomeren und/oder Polymeren unter Reaktionsbedingungen mit einer asymmetrischen gesättigten Peroxidverbindung mit der allgemeinen Formel:
R-O-O-R1,
wobei R und R1 aus der Gruppe ausgewählt sind, die aus Folgenden besteht:
- C(CH₃)₂(CH₂)ₙ-C₆H₍₅₋ₘ₎-(R₂)ₘ, wobei n = 0, 1 oder 2 ist und m = 0, 1, 2 oder 3 ist und wobei R2 eine Isopropyl- oder 2-Hydroxyisopropylgruppe ist;
- einer tertiären Cycloalkylgruppe mit 4 bis 22 Kohlenstoffatomen;
- einer tertiär-Alkylcycloalkylgruppe mit 6 bis 22 Kohlenstoffatomen;
- einer tertiär-Cycloalkylalkylgruppe mit 6 bis 22 Kohlenstoffatomen;
- einer Pinanylgruppe; und
- einer p-Menthylgruppe;
wobei Alkyl-, Aryl- und Aralkylgruppen gegebenenfalls mit einer oder mehreren funktionellen Gruppen, wie Hydroxy, Carboxy, substituiert sein können.

9. Verfahren gemäß Anspruch 8, wobei R und/oder R1 ausgewählt sind aus:
- C(CH₃)₂-CH₂-C₆H₅.

10. Verfahren gemäß Anspruch 8 oder 9, wobei das Peroxid ausgewählt ist aus:
- ROOC(CH₃)₂CH₂C₆H₅,
wobei R = C₆H₅C(CH₃)₂.

11. Verfahren gemäß einem der vorstehenden Ansprüche 8 bis 10, wobei der Peroxid-Initiator eine Halbwertszeit von 1 Stunde bei 90 bis 200 °C, vorzugsweise bei 100 bis 160 °C, hat.

12. Verfahren gemäß Anspruch 11, wobei der verwendete Peroxid-Initiator in einer Menge im Bereich von 0,001 bis 15 Gew.-%, bezogen auf das Gewicht des Monomers, vorzugsweise 0,005 bis 10 Gew.-% und am meisten bevorzugt in einer Menge von 0,01 bis 5 Gew.-% vorhanden ist.

13. Verfahren gemäß Anspruch 12, wobei die Reaktion innerhalb eines Temperaturbereichs von 30 bis 350 °C, vorzugsweise 40 bis 300 °C, durchgeführt wird.

14. Verfahren gemäß Anspruch 13, wobei es sich bei den Reaktanten um ein für die Polymerisation geeignetes Monomer sowie olefinische oder ethylenisch ungesättigte Monomere handelt.

15. Verfahren gemäß Anspruch 14, wobei das Monomer aus der Gruppe ausgewählt ist, die aus Folgenden besteht: olefinischen oder ethylenisch ungesättigten Monomeren, zum Beispiel substituierten oder unsubstituierten vinylaromatischen Monomeren einschließlich Styrol, α-Methylstyrol, p-Methylstyrol und halogenierten Styrolen; Divinylbenzol; Ethylen; ethylenisch ungesättigten Carbonsäuren und Derivaten davon, wie (Meth)acrylsäureestern, Acrylsäure, Methoxyethylacrylat, Dimethylamino(meth)acrylat, Isobutylmethacrylat, Laurylmethacrylat, Stearylmethacrylat, Allylmethacrylat, 2-Hydroxypropyl(meth)acrylat, Methacrylamid, z.B. Butyl-(meth)acrylat, 2-Ethylhexyl(meth)acrylat, 2-Ethylhexyl(meth)acrylat, 2-Hydroxyethyl(meth)acrylat und Glycidyl(meth)acrylat, Methyl(meth)-acrylat und Ethyl(meth)acrylat; ethylenisch ungesättigten Nitrilen und Amiden, wie Acrylnitril, Methacrylnitril und Acrylamid; substituierten oder unsubstituierten ethylenisch ungesättigten Monomeren, wie Butadien, Isopren und Chloropren; Vinylestern, wie Vinylacetat und Vinylpropionat und Vinylester von Versatic Acid; ethylenisch ungesättigten Dicarbonsäuren und ihren Derivaten einschließlich Mono- und Diestern, Anhydriden und Imiden, wie Maleinsäureanhydrid, Citraconsäureanhydrid, Citraconsäure, Itaconsäure, 5-Norbornen-2,3-dicarbonsäureanhydrid, Maleinsäure, Fumarsäure, Aryl-, Alkyl- und Aralkylcitraconimiden und -maleimiden; Vinylhalogeniden, wie Vinylchlorid und Vinylidenchlorid; Vinylethern, wie Methylvinylether und n-Butylvinylether; Olefinen, wie Ethylen, Isobuten und 4-Methylpenten; und Allylverbindungen, wie (Di)allylestern, zum Beispiel Diallylphthalaten, (Di)allylcarbonaten und Triallyl(iso)cyanurat.

16. Verfahren gemäß Anspruch 8 zur Härtung von Polymeren, insbesondere ungesättigten Polyestern und/oder ungesättigten Polyesterharzen, wobei das Reagens aus der Gruppe ausgewählt ist, die im Wesentlichen aus polymerisierbaren Monomeren besteht, einschließlich Styrol, α-Methylstyrol, p-Methylstyrol, Chlorstyrolen, Bromstyrolen, Vinylbenzylchlorid, Divinylbenzol, Diallylmaleat, Dibutylfumarat, Triallylphosphat, Triallylcyanurat, Diallylphthalat, Diallylfumarat, Methyl(meth)acrylat, n-Butyl(meth)acrylat, Ethylacrylat und Gemischen davon, die mit ungesättigten Polyestern copolymerisierbar sind, welche erhalten werden durch Verestern wenigstens einer ethylenisch ungesättigten Di- oder Polycarbonsäure, Anhydrid oder Säurehalogenid, wie Maleinsäure, Fumarsäure, Glutaconsäure, Itaconsäure, Mesaconsäure, Citraconsäure, Allylmalonsäure, Tetrahydrophthalsäure, mit gesättigten und ungesättigten Di- oder Polyolen, wie Ethylenglycol, Diethylenglycol, Triethylenglycol, 1,2- und 1,3-Propandiol, 1,2-, 1,3- und 1,4-Butandiol, 2,2-Dimethyl-1,3-propandiol, 2-Hydroxymethyl-2-methyl-1,3-propandiol, 2-Buten-1,4-diol, 2-Butin-1,4-diol, 2,4,4-Trimethyl-1,3-pentandiol, Glycerin, Pentaerythrit, Mannit, wobei die Di- oder Polycarbonsäuren gegebenenfalls zum Teil durch gesättigte Di- oder Polycarbonsäuren, wie Adipinsäure, Bernsteinsäure, und/oder durch aromatische Di- oder Polycarbonsäuren, wie Phthalsäure, Trimellithsäure, Pyromellithsäure, Isophthalsäure und Terephthalsäure, ersetzt sind und wobei die verwendeten Säuren gegebenenfalls mit Gruppen substituiert sind, wie halogenierte Säuren einschließlich Tetrachlorphthalsäure und Tetrabromphthalsäure.

17. Verfahren gemäß einem der Ansprüche 8 bis 16 zur Lösungspolymerisation, wobei die Monomere von substituierter oder unsubstituierter Acrylsäure oder Methacrylsäure oder Estern davon abgeleitet sind, wobei 20-40 Gew.-% der Monomerzusammensetzung Hydroxyalkylacrylat oder -methacrylat sind, in einem Temperaturbereich von 90 bis 200 °C in Gegenwart eines Lösungsmittels, das für Beschichtungsanwendungen mit hohem Feststoffgehalt geeignet ist, wobei das Verhältnis von Lösungsmittel zu Monomer 3:1 bis 0,1:1 beträgt.

18. Verfahren gemäß Anspruch 17, wobei das Acrylatmonomer aus der Gruppe ausgewählt ist, die aus Folgenden besteht:
- Hydroxyalkylacrylaten und -methacrylaten einschließlich 2-Hydroxyethylacrylat, 2-Hydroxypropylacrylat, 2-Hydroxybutylacrylat, 2-Hydroxyethylmethacrylat, 2-Hydroxypropylmethacrylat, 2-Hydroxybutylmethacrylat, 3-Hydroxypropylacrylat und 4-Hydroxybutylacrylat; und
- Alkylacrylaten und -methacrylaten einschließlich Methylmethacrylat, Ethylmethacrylat, Butylmethacrylat, Isobutylmethacrylat, Hexylmethacrylat, 2-Ethylhexylmethacrylat, Laurylmethacrylat, Ethylacrylat, Propylacrylat, Isopropylacrylat, Butylacrylat, Isobutylacrylat, Hexylacrylat, 2-Ethylhexylacrylat, Laurylacrylat sowie Styrol, Paramethylstyrol, Acrylsäure, Methacrylsäure und Vinylacetat.

19. Verfahren gemäß Anspruch 18, das weiterhin den Schritt des Hinzufügens eines oder mehrerer Haftvermittler umfasst, die aus der Gruppe ausgewählt sind, die im Wesentlichen aus
- Diethylaminoethylmethacrylat, Dimethylaminoethylmethacrylat, tertiär-Butylaminoethylmethacrylat, 3-(2-Methacryloxyethyl)-2,2-spirocyclohexyloxazoliden und (Meth)acrylsäure
besteht.

20. Verfahren gemäß einem der Ansprüche 1 bis 4, 8 bis 19, das in Gegenwart eines geeigneten Lösungsmittels durchgeführt wird, welches aus der Gruppe ausgewählt ist, die im Wesentlichen aus Folgenden besteht:
- Toluol, Xylol, Ethylacetat, Aceton, Methylethylketon, Methyl-n-amylketon, Ethylalkohol, Benzylalkohol, Oxohexylacetat, Oxoheptylacetat, Propylenglycolmethyletheracetat, Mineralbenzin und anderen aliphatischen, cycloaliphatischen und aromatischen Kohlenwasserstoffen, Estern, Ethern, Ketonen und Alkoholen, die herkömmlicherweise verwendet werden.

## Revendications

1. Procédé de préparation de (co)polymères acryliques convenant pour des applications de revêtement à haute teneur en solides, comprenant l'étape consistant à :
- mettre en contact dans des conditions de polymérisation, le composé peroxyde saturé asymétrique, le peroxyde de tert-butyl-1,1,3,3-tétraméthylbutyle (TBTMBP) avec au moins un monomère d'acrylate polymérisable.

2. Procédé selon la revendication 1, dans lequel le monomère d'acrylate est choisi dans le groupe constitué essentiellement :
- des acrylates et méthacrylates d'hydroxyalkyle comprenant l'acrylate de 2-hydroxyéthyle, l'acrylate de 2-hydroxypropyle, l'acrylate de 2-hydroxybutyle, le méthacrylate de 2-hydroxyéthyle, le méthacrylate de 2-hydroxypropyle, le méthacrylate de 2-hydroxybutyle, l'acrylate de 3-hydroxypropyle, l'acrylate de 4-hydroxybutyle ; et
- des acrylates et méthacrylates d'alkyle comprenant le méthacrylate de méthyle, le méthacrylate d'éthyle, le méthacrylate de butyle, le méthacrylate d'isobutyle, le méthacrylate d'hexyle, le méthacrylate de 2-éthylhexyle, le méthacrylate de lauryle, l'acrylate d'éthyle, l'acrylate de propyle, l'acrylate d'isopropyle, l'acrylate de butyle, l'acrylate d'isobutyle, l'acrylate d'hexyle, l'acrylate de 2-éthylhexyle, l'acrylate de lauryle, l'acide acrylique, et l'acide méthacrylique,
et dans lequel on utilise éventuellement un comonomère choisi dans le groupe du styrène, du paraméthylstyrène, et de l'acétate de vinyle.

3. Procédé selon la revendication 1 ou 2, dans lequel le ou les monomères d'acrylate sont dérivés de l'acide acrylique, de l'acide méthacrylique substitués ou non substitués ou d'esters de ceux-ci et sont soumis à une polymérisation en solution dans laquelle de 20 à 40 % en poids de la composition de monomère est un acrylate ou un méthacrylate d'hydroxyalkyle dans une plage de température allant de 90 à 200 °C, en présence d'un solvant approprié pour des applications de revêtement à haute teneur en solides, dans laquelle le rapport du solvant au monomère est de 3:1 à 0,1:1.

4. Procédé selon l'une quelconque des revendications 1 à 3 précédentes, dans lequel le peroxyde de tert-butyl-1,1,3,3-tétraméthylbutyle est présent dans la plage allant de 0,001 à 15 % en poids, par rapport au poids de la quantité totale de monomère, de préférence de 0,005 à 10 % en poids et plus préférablement en une quantité de 0,01 à 5 % en poids.

5. Résine acrylique pouvant être obtenue par le procédé selon l'une quelconque des revendications 1 à 4 ayant une ou plusieurs des propriétés suivantes :
- une polydispersion de 1,5 à 3 ;
- une teneur en solides de 40 à 90 % ;
- un Mm (g/mol) de 1000 à 8000 ;
- un Mn (g/mol) de 500 à 4000.

6. Utilisation de TBTMBP, éventuellement en combinaison avec du peroxyde de tert-amyl-t-butyle (TATBP), pour durcir des résines polyesters insaturées ou pour polymériser des monomères acryliques pour donner les (co)polymères acryliques appropriés pour des applications de revêtement à haute teneur en solides.

7. Utilisation de TBTMBP dans la dégradation de polymères.

8. Procédé de réalisation d'une ou de plusieurs des réactions chimiques suivantes :
- la polymérisation de monomère(s), de préférence comprenant les (co)monomères acryliques pour rendre un (co)polymère approprié pour des applications de revêtement à haute teneur en solides;
- la dégradation des polymères ; et
- le durcissement des polymères,
comprenant l'étape consistant à mettre en contact un ou des monomères et/ou polymères dans des conditions réactionnelles avec un composé peroxyde saturé asymétrique ayant la formule générale :
R-O-O-R1
dans laquelle R et R1 sont choisis dans le groupe constitué de :
- C(CH₃)₂(CH₂)ₙ-C₆H₍₅₋ₘ₎-(R2)ₘ, dans lequel n = 0, 1 ou 2 et m = 0, 1, 2 ou 3 et dans lequel R2 = un groupe isopropyle ou 2-hydroxyisopropyle,
- un groupe tert-cycloalkyle ayant de 4 à 22 atomes de carbone,
- un groupe tert-alkylcycloalkyle ayant de 6 à 22 atomes de carbone,
- un groupe tert-cycloalkylalkyle ayant de 6 à 22 atomes de carbone,
- un groupe pinanyle, et
- un groupe p-menthyle,
dans laquelle les groupes alkyle, aryle et aralkyle peuvent être éventuellement substitués par un ou plusieurs groupes fonctionnels, tels que le groupe hydroxy et le groupe carboxy.

9. Procédé selon la revendication 8, dans lequel R et/ou R1 sont choisis parmi :
- C(CH₃)₂-CH₂-C₆H₅.

10. Procédé selon la revendication 8 ou 9, dans lequel le peroxyde est choisi parmi:
- ROOC(CH₃)₂CH₂C₆H₅, dans lequel R = C₆H₅C(CH₃)₂.

11. Procédé selon l'une quelconque des revendications 8 à 10 précédentes, dans lequel l'initiateur peroxyde a une demi-vie de 1 heure à une température de 90 à 200 °C, de préférence de 100 à 160 °C.

12. Procédé selon la revendication 11, dans lequel l'initiateur peroxyde utilisé est présent dans la plage allant de 0,001 à 15 % en poids par rapport au poids du monomère, de préférence de 0,005 à 10 % en poids, et de manière préférée en une quantité de 0,01 à 5 % en poids.

13. Procédé selon la revendication 12, dans lequel la réaction est réalisée dans une plage de température de 30 à 350 °C, de préférence de 40 à 300 °C.

14. Procédé selon la revendication 13, dans lequel le réactif est un monomère approprié pour la polymérisation et est un monomère oléfinique ou éthyléniquement insaturé.

15. Procédé selon la revendication 14, dans lequel le monomère est choisi dans le groupe constitué des monomères oléfiniques ou éthyléniquement insaturés, par exemple les monomères aromatiques vinyliques substitués ou non substitués, comprenant le styrène, le α-méthylstyrène, le p-méthylstyrène, et les styrènes halogénés ; le divinylbenzène ; l'éthylène ; les acides carboxyliques éthyléniquement insaturés et des dérivés de ceux-ci tels que les esters (méth)acryliques, l'acide acrylique, l'acrylate de méthoxyéthyle, le (méth)acrylate de diméthylamino, le méthacrylate d'isobutyle, le méthacrylate de lauryle, le méthacrylate stéarique, le méthacrylate d'allyle, le (méth)acrylate de 2-hydroxypropyle, le méthacrylamide, par exemple le (méth)acrylate de butyle, le (méth)acrylate de 2-éthylhexyle, le (méth)acrylate de 2-hydroxyéthyle et le (méth)acrylate de glycidyle, le (méth)acrylate de méthyle et le (méth)acrylate d'éthyle ; les nitriles et les amides éthyléniquement insaturés tels que l'acrylonitrile, le méthacrylonitrile et l'acrylamide ; les monomères éthyléniquement insaturés substitués ou non substitués tels que le butadiène, l'isoprène et le chloroprène ; les esters vinyliques tels que l'acétate de vinyle et le proprionate de vinyle et les esters de vinyle de l'acide versatique ; les acides dicarboxyliques éthyléniquement insaturés et leurs dérivés comprenant les mono- et diesters, les anhydrides, et les imides, tels que l'anhydride maléique, l'anhydride citraconique, l'acide citraconique, l'acide itaconique, l'anhydride nadique, l'acide maléique, l'acide fumarique, les aryl-, alkyl- et aralkyl-citraconimides et maléimides ; les halogénures de vinyle tels que le chlorure de vinyle et le chlorure de vinylidène ; les éthers vinyliques tels que l'éther méthylvinylique et l'éther n-butylvinylique ; les oléfines telles que l'éthylène, l'isobutène et le 4-méthylpentène ; et les composés allyliques tels que les esters (di)allyliques, par exemple les phtalates de diallyle, les carbonates de (di)allyle, et le (iso)cyanurate de triallyle.

16. Procédé selon la revendication 8 pour durcir des polymères, en particulier des polyesters insaturés et/ou des résines polyesters insaturées, dans lequel le réactif est choisi dans le groupe constitué essentiellement de monomères polymérisables comprenant le styrène, le α-méthylstyrène, le p-méthylstyrène, les chlorostyrènes, les bromostyrènes, le chlorure de vinylbenzyle, le divinylbenzène, le maléate de diallyle, le fumarate de dibutyle, le phosphate de triallyle, le cyanurate de triallyle, le phtalate de diallyle, le fumarate de diallyle, le (méth)acrylate de méthyle, le (méth)acrylate de n-butyle, l'acrylate d'éthyle, et des mélanges de ceux-ci, qui sont copolymérisables avec des polyesters insaturés obtenus par estérification d'au moine un acide di- ou polycarboxylique éthyléniquement insaturé, anhydride ou halogénure d'acide, tel que l'acide maléique, l'acide fumarique, l'acide glutaconique, l'acide itaconique, l'acide mésaconique, l'acide citraconique, l'acide allylmalonique, l'acide tétrahydrophtalique, avec des di- ou polyols saturés et insaturés, tels que l'éthylène glycol, le diéthylène glycol, le triéthylène glycol, les 1,2- et 1,3-propanediols, les 1,2-, 1,3- et 1,4-butanediols, le 2,2-diméthyl-1,3-propanediol, le 2-hdyroxyméthyl-2-méthyl-1,3-propanediol, le 2-butèn-1,4-diol, le 2-butyn-1,4-diol, le 2,4,4-triméthyl-1,3-pentanediol, le glycérol, le pentaérythritol, le mannitol, dans lequel les acides di- ou polycarboxyliques sont éventuellement partiellement remplacés par des acides di- ou polycarboxyliques saturés, tels que l'acide adipique, l'acide succinique, et/ou par des acides di- ou polycarboxyliques aromatiques, tels que l'acide phtalique, l'acide trimellitique, l'acide pyromellitique, l'acide isophtalique, et l'acide téréphtalique, et dans lesquels les acides utilisés sont éventuellement substitués par des groupes tels que des acides halogénés comprenant l'acide tétrachlorophtalique et l'acide tétrabromophtalique.

17. Procédé selon l'une quelconque des revendications 8 à 16 pour la polymérisation en solution dans laquelle les monomères sont dérivés d'un acide acrylique ou d'un acide méthacrylique substitué ou non substitué ou d'esters de ceux-ci, dans laquelle de 20 à 40 % en poids de la composition de monomère est un acrylate ou méthacrylate d'hydroxyalkyle dans une plage de température allant de 90 à 200 °C, en présence d'un solvant approprié pour des applications de revêtement à haute teneur en solides, dans laquelle le rapport du solvant au monomère est de 3:1 à 0,1:1.

18. Procédé selon la revendication 17, dans lequel le monomère est choisi dans le groupe constitué :
- des acrylates et méthacrylates d'hydroxyalkyle comprenant l'acrylate de 2-hydroxyéthyle, l'acrylate de 2-hydroxypropyle, l'acrylate de 2-hydroxybutyle, le méthacrylate de 2-hydroxyéthyle, le méthacrylate de 2-hydroxypropyle, le méthacrylate de 2-hydroxybutyle, l'acrylate de 3-hydroxypropyle, et l'acrylate de 4-hydroxybutyle ; et
- des acrylates et méthacrylates d'alkyle comprenant le méthacrylate de méthyle, le méthacrylate d'éthyle, le méthacrylate de butyle, le méthacrylate d'isobutyle, le méthacrylate d'hexyle, le méthacrylate de 2-éthylhexyle, le méthacrylate de lauryle, l'acrylate d'éthyle, l'acrylate de propyle, l'acrylate d'isopropyle, l'acrylate de butyle, l'acrylate d'isobutyle, l'acrylate d'hexyle, l'acrylate de 2-éthylhexyle, l'acrylate de lauryle, et le styrène, le p-méthylstyrène, l'acide acrylique, l'acide méthacrylique, et l'acétate de vinyle.

19. Procédé selon la revendication 18 comprenant en outre l'étape consistant à ajouter un ou plusieurs agents favorisants l'adhérence choisis dans le groupe constitué essentiellement des :
- méthacrylate de diéthylaminoéthyle, méthacrylate de diméthylaminoéthyle, méthacrylate de tert-butylaminoéthyle, 3-(2-méthacryloxyéthyl)-2,2-spirocyclohexyle oxazolidène, et acide (méth)acrylique.

20. Procédé selon l'une quelconque des revendications 1 à 4 et 8 à 19, réalisé en présence d'un solvant approprié choisi dans le groupe constitué de préférence essentiellement des :
- toluène, xylène, acétate d'éthyle, acétone, méthyléthylcétone, méthyl-n-amylcétone, éthanol, alcool benzylique, acétate d'oxohexyle, acétate d'oxoheptyle, l'acetate de l'ether methylique de propylène glycol, acétate de méthyle, essences minérales, et d'autres hydrocarbures aliphatiques, cycloaliphatiques et aromatiques, esters, éthers, cétones, et alcools conventionnellement utilisés.
